# EUROPÄISCHE PATENTSCHRIFT

(11) **EP 1 636 542 B1**
(45) Veröffentlichungstag und Bekanntmachung des Hinweises auf die Patenterteilung: **05.09.2007**
(21) Anmeldenummer: 04738742.8
(22) Anmeldetag: 21.06.2004
(51) Int. Cl.: G01B 11/26

(54) **VERFAHREN UND MESSVORRICHTUNG ZUR BERÜHRUNGSLOSEN MESSUNG VON WINKELN ODER WINKELÄNDERUNGEN AN GEGENSTÄNDEN**
METHOD AND MEASURING DEVICE FOR THE CONTACTLESS MEASUREMENT OF ANGLES OR ANGLE MODIFICATIONS IN OBJECTS
PROCEDE ET DISPOSITIF DE MESURE POUR LA MESURE SANS CONTACT D'ANGLE ET DE MODIFICATIONS ANGULAIRES SUR DES OBJETS

(30) Priorität: 20.06.2003 DE 10327939
(43) Veröffentlichungstag der Anmeldung: 22.03.2006
(73) Patentinhaber: Hofbauer, Engelbert, 81245 München (DE)
(72) Erfinder: Hofbauer, Engelbert, 81245 München (DE)
(74) Vertreter: Kopf, Korbinian Paul
(86) Internationale Anmeldenummer: PCT/DE2004/001293
(87) Internationale Veröffentlichungsnummer: WO 2004/113832

(56) Entgegenhaltungen:
- DE-A- 19 741 290
- US-A- 5 218 415
- US-A- 6 043 892
- US-A- 6 046 799

## Beschreibung

Die Erfindung bezieht sich auf ein Verfahren und eine Vorrichtung zum Messen von Winkeln oder Winkeländerungen an Gegenständen.

Aus den Patentschriften CH 454 477, CH 451 532 sowie DE 27 59 556 C2 sind Messanordnungen nach dem Reflexionsverfahren bekannt, die zur Messung von Sturz und Spur von Kraftfahrzeugen eingesetzt werden. Dabei wird eine Meßskala mit einem Projektor über die der Winkeländerung unterworfenen, reflektierenden Fläche auf eine Mattscheibe bzw. auf eine Mattscheibe mit optoelektronischen Wandlern abgebildet. Der Nachteil bei diesen Verfahren ist einerseits der notwendige feste Bezugsabstand zwischen Messgerät und Spiegel, um ein scharfes Bild auf der Mattscheibe zu erhalten, welches manuell abgelesen werden muß und nicht einfach automatisierbar ist. Andererseits ist für eine automatische Ermittlung der Messwerte durch die relativ starke Vergrößerung des Bildes ein spezieller, aufwendiger und teurer Empfänger mit den optoelektronischen Wandlern und eine spezielle Auswerteelektronik nötig. Außerdem sind Anzahl und Größe (Packungsdichte) der optoelektronischen Wandler begrenzt, so dass Auflösung und Messbereich für die meisten Anwendungen zu gering sind.

Es ist weiterhin grundsätzlich allgemein bekannt, Winkel oder Winkeländerungen berührungslos mit Hilfe eines sogenannten Autokollimationsfernrohres zu bestimmen, bei dem mit Hilfe eines Strahlenteilers und einem als Kollimator und Fernrohr wirkendem Objektiv ein geeignetes projiziertes Objekt (i.d.R. ein Fadenkreuz) nach Reflexion an einer der Winkeländerung unterworfenen reflektierenden Fläche, ausgewertet wird. Eine entsprechende Ausgestaltungen ist u.a. in DE 33 11 945 A1, DE 197 41 290 A1 sowie US 5 513 000 bekannt. In DE 197 41 290 A1 ist als Objekt statt eines Fadenkreuzes eine Lochblende angeordnet. Ein wesentlicher Nachteil bei diesen Anordnungen ist, dass mit zunehmender Meßentfernung, d.h. bei größer werdendem Abstand zwischen Spiegel und Autokollimator, der Winkelmessbereich aufgrund von Abschattung durch Blendenwirkungen abnimmt. Bei der US 5 513 000 ist das Problem bekannt bzw. beschrieben. Dort enthält der Autokollimator zwei schaltbare Lichtquellen, die innerhalb der Objektebene seitlich versetzt sind und damit zwei kleine Messbereiche ermöglichen. Das Problem dabei ist, dass eine kontinuierliche Messung innerhalb eines größeren Messbereiches nicht möglich ist. Aus der US 5 883 709 ist weiterhin eine Anordnung mit Kollimator und

Fernrohr unter einem spitzen Winkel bekannt, bei der eine punktförmige Lichtquelle als Objektgenerator fungiert. Diese Anordnung funktioniert, allerdings für große Winkel bis 30° auch nur bei sehr kleinen Abständen zwischen Prüfling und Empfängersystem, da ebenfalls die Linsenöffnung des Empfängerkollimators vignettiert und die vorher beschriebene Problematik ebenfalls nicht löst. Aus der US-5218415 ist eine Vorrichtung bekannt wobei eine Feld- und Aperturblende räumlich getrennt angeordnet sind.

Der Erfindung liegt das technische Problem zugrunde, ein Verfahren bzw. eine zugehörige Meßvorrichtung zu schaffen, dessen Winkelmessbereich größer ist, als der von herkömmlichen Verfahren, wobei auch bei größeren Entfernungen zwischen Messobjekt und Meßanordnung ein ausreichender Winkelmessbereich vorhanden sein soll, der auch bei unterschiedlichen Meßentfernungen linear proportionale Messwerte liefert. Darüberhinaus soll die Auswertung automatisch erfolgen können.

Dieses technische Problem wird erfindungsgemäß von einem Verfahren mit den Merkmalen des Anspruchs 1 bzw. von einer Messvorrichtung mit den Merkmalen des Anspruchs 6 gelöst.

Bei dem erfindungsgemäßen Verfahren wird ein Strahlenbündel verwendet, welches von einem homogen ausgeleuchteten flächenhaften Strahlungsfeld ausgeht und die Blende gleichmäßig durchleuchtet. Als Strahlung wird vorzugsweise optische, inkohärente Strahlung, im Ausführungsbeispiel sichtbares, monochromatisches Licht zwischen 400 und 780 nm verwendet, wobei alternativ auch IR-, UV- sowie der gesamte weitere Bereich des elektromagnetischen Spektrums von Gamma- über Röntgen- bis Mikrowellenstrahlung denkbar ist. Weiterhin sind auch monochromatische und/oder kohärente bzw. teilkohärente Strahlenquellen denkbar.

Die Blende wird anschließend zunächst an einer der Winkeländerung unterworfenen reflektierenden Fläche mit dem Abbildungsmaßstab 1 abgebildet und anschließend das im doppelten Abstand von Blende zu reflektierender Fläche entstehende virtuelle Bild der Blende über das optische System auf eine Detektorfläche abgebildet.

Der Erfindung liegt der Gedanke zugrunde, eine laterale Blendenbildverschiebung an einem Detektor, welche proportional der Winkeländerung des reflektierenden Elementes ist, auszuwerten und den genauen Betrag und die Richtung (Vorzeichen) gegenüber einer vorherigen Lage oder einer Bezugslage (Nulllage) zu bestimmen.

Bei dieser erfindungsgemäßen Art der Auswertung liegt der wesentliche Vorteil darin, dass die bei normalen Autokollimationsverfahren problematische Vignettierung durch endlich begrenzte Linsenöffnungen genutzt wird und genau diese vignettierende Blende abgebildet bzw. ausgewertet wird.

Dabei werden jeweils diejenigen zur Abbildung der Blende beitragenden Strahlenbündel genutzt, die winkelsymmetrisch das Strahlenbündel umgeben, welches den Hauptstrahl enthält, der exakt senkrecht auf die der Winkeländerung unterworfenen reflektierenden Fläche trifft.

Diejenigen zur Abbildung der Blende beitragenden, jedoch nicht senkrecht auf den Spiegel treffenden Strahlenbündel enthalten ebenfalls Hauptstrahlen, welche den senkrechten Hauptstrahl rotationssymmetrisch/winkelsymmetrisch jeweils um einen der abgebildeten Blendengröße entsprechenden. Winkel umgeben.

Dabei gehen praktisch alle zur Abbildung der Blende beitragenden Strahlen wieder durch das abbildende optische System, unabhängig von der Messentfernung, so dass keine Lichtverluste auftreten.

Diejenigen quasi-parallelen Strahlenbündel, deren Hauptstrahlen einen größeren als der abgebildeten Blendengröße entsprechenden Winkel zum eigentlichen, senkrechten Hauptstrahl haben, gehen nicht bzw. nicht mehr durch das optische System und tragen nicht zur Abbildung bei.

Die beschriebenen Strahlenbündel stammen von benachbarten Leuchtpunkten innerhalb des flächenhaften Strahlers , welche den auf dem senkrechten Hauptstrahl liegenden Leuchtpunkt punktsymmetrisch umgeben.

Als Blendenform hat sich eine kreisrunde Blende als vorteilhaft erwiesen, wobei jedoch auch andere Formen wie elliptische, quadratische, rechteckige oder beliebig andere, geometrische Formen denkbar sind.

Es ist vorteilhaft, wenn Blendendurchmesser und der minimale Abstand zwischen Blende und reflektierender Fläche aufeinander abgestimmt sind, sodass Messbereich und Auflösung optimiert werden können.

Das reflektierendes Element kann als Spiegel ausgeführt sein, es sind aber auch andere das Strahlenbündel ausreichend reflektierende Flächen wie beispielsweise unbeschichtete Glasflächen oder Oberflächen von Flüssigkeiten möglich. Ebenso kann auch der Prüfling selbst als reflektierendes Element wirken. Beispielsweise bei der Prüfung der Oberflächengeometrie von optischen Linsenflächen, optischen Spiegeln, Silizium-Waferscheiben oder anderen, die Strahlung reflektierenden Flächen wie bei der Prüfung der Winkel und Winkelabweichung von Plan- und Keilplatten, Prismen und Winkelspiegeln unterschiedlicher Bauart.

Zweckmäßigerweise ist das reflektierende Element als Planspiegel ausgeführt, der gemäß der geforderten Messgenauigkeit bzw. zulässigen Messunsicherheit einer bestimmten Ebenheitsanforderung unterliegt. Es sind aber auch andere Spiegelgeometrien denkbar.

Weiterhin kann als reflektierendes Element (5) ein Element verwendet werden, welches eine entsprechend strukturierte Oberfläche besitzt, wie es beispielsweise ein Beugungsgitter aufweist. Die Beugungswinkel sind für ein festes Gitter gemäß der Gitterkonstante und der Wellenlänge der Strahlung gegeben. Für die verschiedenen Beugungsordnungen werden jeweils entsprechende ganzzahlige Vielfache des Beugungswinkels reflektiert, welche mit der Vorrichtung innerhalb deren Messbereich teilweise erfasst werden. Es sind beliebige Gitter mit unterschiedlichsten Glanz- sowie Beugungswinkeln denkbar.

In einer praktischen Ausführung ist das Beugungsgitter derart gestaltet, dass der Beugungswinkel des Gitters gerade etwas kleiner ist, als der einfache, gesamte, Messbereich der Vorrichtung (mit einem normalen Reflektor bzw. Planspiegel; ohne Beugungsgitter). Im Grenzbereich d.h. bei einer Winkeländerung des Reflektors über die Grenze des Messbereiches hinaus, wird vor verlassen der Strahlungsfläche der entsprechenden Beugungsordnung das Strahlenbündel der nächsten Beugungsordnung auf dem Detektor abgebildet und als Winkelmesswert detektiert. Beim Übergang der einen erfassten Beugungsordnung zur nächsten wird der Detektor im Regelfall 2 Messpunkte detektieren. Die ermittelte Differenz bzw. der Abstand der beiden Messpunkte wird in der Auswertung als Offset berücksichtigt.

Damit können beispielsweise auch der doppelte, dreifache und weitere ganzzahlige Vielfache des ursprünglichen Winkelwertes bei gleichbleibender Genauigkeit und Auflösung noch erfasst werden.

In der Regel wird das Gitter auf einer planen Glasfläche aufgebracht sein. Es sind aber auch andere als plane Geometrien möglich. Außerdem sind weitere Materialien wie Kunststoffe, Metalle und andere Werkstoffe denkbar.

Der Detektor, welcher das Bild der Blende erfasst, wird vorzugsweise als optoelektronischer Empfänger wie z.B. eine Quadrantendiode, eine positionsempfindliche Lateraleffektdiode (PSD) oder ein CCD-Zeilen- bzw. vorzugsweise ein CCD-Flächensensor ausgeführt sein, wobei mit einer nachgeschalteten Auswerteelektronik oder einem PC eine automatische Auswertung erfolgen kann.

Weiterhin kann die Lage des Blendenbildes auch visuell über ein Okular mit entsprechenden Hilfsmitteln wie Okularmessmarken oder Okularmikrometer ausgewertet werden.

In einer günstigen Ausgestaltung des Verfahrens wird beim Schritt des Durchleuchtens ein quasi-paralleles oder näherungsweise quasi-paralleles Strahlenbündel verwendet. Vorteil dieses Strahlenbündels ist, dass praktisch alle Strahlen die zur Abbildung der Blende beitragen, wieder parallel vom Planspiegel reflektiert werden und alle Strahlen durch die Blende hindurch in das optische System hindurchtreten, sodaß keine Lichtverluste und vor allem keine Lichtstärkenänderungen am Detektor bei unterschiedlichen Mess-Entfernungen (zwischen Blende und Spiegel bzw. Spiegel und optischem System) stattfinden.

Erzeugt wird das quasi-parallele oder näherungsweise quasi-parallele Strahlenbündel durch eine Strahlungsquelle im objektseitigen Brennpunkt bzw. in der Nähe des Brennpunkts des optischen Systems, wobei die Strahlen aus einem den Brennpunkt endlich innerhalb der Brennebene umgebenden Bereich eines optischen Systems kommen bzw. dahingehend erzeugt werden, dass sie von diesem Bereich zu kommen scheinen.

In einer vorteilhaften praktischen Ausgestaltung wird ein einziges optisches System mit einem Strahlenteiler zwischen Beleuchtung bzw. Detektor und optischem System verwendet. Das optische System übernimmt gleichzeitig die Funktion der Durchleuchtung der Blende mit quasi-paralleler Strahlung und die Funktion der Abbildung der Blende auf den Detektor. Bei dieser Art der Anordnung ist die beleuchtete Blende gleichzeitig die Aperturblende des abbildenden Systems. Alternativ kann auch ein getrenntes 2-teiliges optisches System verwendet werden, bei dem zwei optische Systeme unter einem

Winkel 0°< ϕ < 90° oder einem Winkel ϕ = 90° mit einem zusätzlichen Strahlenteiler zwischen dem ersten optischen System und dem reflektierenden Element angeordnet sind.

In einer besonderen Ausgestaltung der Erfindung kann die Blende im bildseitigen Brennpunkt des optischen Systems angeordnet sein, um beim Schritt des Abbildens der Blende einen telezentrischen Strahlengang zu erhalten, der insbesondere dann Vorteile hat, wenn durch unterschiedliche, Messentfernungen unterschiedliche Bildentfernungen entstehen, welche nicht nachfokussiert werden können oder sollen.

Die Messvorrichtung zur berührungslosen Messung von Winkeln oder Winkeländerungen an Gegenständen enthält eine Strahlungsquelle zur Erzeugung eines Strahlenbündels, eine nachgeschaltete Blende, die vom Strahlenbündel durchleuchtet wird, ein in einer vorgegebenen Meßentfernung nachgeschaltetes reflektierendes Element, welches der zu messenden Winkeländerung unterworfen wird, ein optisches System, welches das Blendenabbild aus dem zurückreflektierten Strahlenbündel erzeugt, einen optoelektronischen Detektor, auf dem das Blendenabbild projiziert wird, und eine nachgeschaltete elektronische Auswerteeinheit, wobei die Auswerteeinheit zur Bestimmung der Lage des Blendenbildes zu einer vorherigen Referenzlage bzw. zu einem Referenzpunkt eingerichtet ist, um daraus den Messwert des Winkels bzw. der Winkeländerung zu erhalten.

In einer besonders vorteilhaften Ausgestaltung ist die Auswerteeinheit derart eingerichtet, dass sie den Mittelpunkt des Blendenbildes anhand dessen Helligkeitsverteilung automatisch ermittelt. Gleichermaßen lassen sich jedoch auch die Ränder des Blendenbildes ermitteln und auswerten.

In einer Variante der Auswerteeinheit lässt sich der Mittelpunkt des Blendenbildes auch anhand dessen Flächenschwerpunkts automatisch ermitteln.

Für gewisse Anwendungen, beispielsweise bei kleinen Abständen und/oder bei langen Objektivbrennweiten (für extrem hohe Auflösungen und Genauigkeiten), hat es sich als vorteilhaft erwiesen, dass die Blende eine variable Blendenöffnung aufweist, um entsprechend der vorgegebenen Meßentfernung eine Anpassung der Größe des Blendenabbildes auf dem Detektor zu ermöglichen.

In einer besonderen Variante kann das optische System in Richtung der optischen Achse verstellbar sein, um das Blendenbild auf dem Detektor zu fokussieren. Dabei kann der Kontrast bzw. der Übergang des Intensitätsverlaufes zwischen den hellen und dunklen Anteilen des Blendenbildes den Anforderungen gemäß entsprechend angepasst sein, wobei in manchen Fällen auch unscharfe Abbildungen vorteilhaft sein können. Anstelle der Verschiebung des optischen Systems kann natürlich auch der Detektor verschiebbar angeordnet sein, um das Blendenbild zu fokussieren.

In einer besonderen, praktischen Ausgestaltung hat es sich als vorteilhaft erwiesen, dass die Blende, das optische System, das reflektierende Element und der Detektor auf einer Achse angeordnet sind, dass ein Strahlenteiler auf dieser Achse zwischen Blende und Detektor angeordnet ist und die Strahlungsquelle das Strahlenbündel zur Beleuchtung der Blende quer zu dieser Achse in den Strahlenteiler einstrahlt. Auf diese Weise kann ein sehr einfacher, kompakter und kostengünstiger Aufbau realisiert werden, bei dem die Beleuchtung der Blende und deren Abbildung mit einem einzigen optischen Element bzw. System durchgeführt werden kann.

In einer praktischen Variante der Erfindung hat sich ergeben, dass als Strahlungsquelle eine monochromatische Lichtquelle vorgesehen ist.

Darüberhinaus hat es sich als vorteilhaft erwiesen, dass im Strahlengang ein Filterelement vorgesehen ist, welches die Störstrahlung aus der Umgebung herausfiltert. Besonders günstig ist dabei, wenn die monochromatische Strahlung der Strahlungsquelle gut durch das vorgesehene, das Störlicht der Umwelt herausfilternde Filter hindurchgelassen wird.

Eine besondere Ausgestaltung der Messvorrichtung weist im Strahlengang zwischen Strahlungsquelle und Blende ein lichtstreuendes Element auf. Dieses lichtstreuende Element kann als Streuscheibe, Diffusor bzw. Opalscheibe ausgeführt sein und ermöglicht eine entsprechende Gestaltung der Leuchtdichteverteilung des flächenhaften Strahlers.

Ansonsten sind auch flächenhafte Strahler oder Leuchten mit entsprechenden Leuchtdichteverteilungen oder Displaybeleuchtungen mit generierbaren Absorptionsmustern in der Beleuchtungsebene denkbar, um bestimmte Eigenschaften zu kompensieren (z.B. die Verzeichnug eines Objektives) oder gewisse Charakteristiken zu generieren.

Weiterhin kann, anstatt die reflektierende Fläche den zu messenden Winkeländerungen zu unterwerfen, das Verfahren auch im umgekehrten Sinne eingesetzt werden, indem die Meßvorrichtung den zu messenden Winkeländerungen in Bezug auf die feststehende reflektierende Fläche unterliegt. Beispielsweise kann das Messgerät eingesetzt werden um große, schwere Spiegel, Glasblöcke oder Flüssigkeitsoberflächen derart zu vermessen, dass das Messgerät um eine oder auch zwei orthogonale Achsen exakt geschwenkt bzw. geneigt wird und die gemessene Winkeländerung mit der eingeführten Winkelneigung in Bezug gebracht wird, die Differenz gebildet und die Formabweichung bestimmt werden kann.

In einer besonderen Anwendung ist das reflektierende Element ein optisches Element bestehend aus mindestens 2 optischen Flächen wie sie beispielsweise als Plan- und Keilplatten, Prismen oder Winkelspiegeln bekannt sind. Dabei wird von beiden reflektierenden Flächen ein Bild der Blende auf dem Detektor abgebildet und der Abstand der Bildpunkte als Winkeldifferenz unter Berücksichtigung der Brechzahl bzw. entsprechender Faktoren ermittelt. Standardmäßig lassen sich damit Keilplatten mit bis zu 40°/Brechzahl ermitteln. Außerdem lassen sich Winkelspiegel oder Prismen mit Ablenkungswinkeln von 180° minus max. Winkelmessbereich αₘₐₓ der Anordnung bzw. die

Winkelabweichung von Prismen 90°-αₘₐₓ sowie bei entsprechender Anordnung auch Abweichungen von 45°-Winkelspiegel ermitteln.

In einer besonderen Anwendung können optische Keilplatten und

Prismenflächen - beispielsweise wenn die Flächen gut entspiegelt sind - auch im Durchgang gegen einen Planspiegel vermessen werden. Dabei wird der Prüfling seitlich der optischen Achse auf einen Spiegel gelegt oder an einer Haltevorrichung zwischen Spiegel und Messanordnung gelegt. Die beiden Strahlenbündel, die senkrecht auf den Spiegel treffen ( a) direktes Strahlenbündel aus der Messanordnung b) durch den Prüfling abgelenktes Strahlenbündel) werden abgebildet und erzeugen einen "Doppelpunkt" auf dem Detektor dessen Abstand ausgewertet und den Winkelmesswert ergibt.

In einer weiteren Ausgestaltung kann auf diese Weise auch ein geeignetes "Mehrfach-Prisma" mit entsprechend abgestuften Keilsektoren verwenden werden, sodaß eine einfache Pupillenteilung möglich ist, mit der Prüflinge wie Linsen und, optische Systeme mit Hilfe eines Spiegels oder mit Hilfe einer CCD Kamera in Fernrohranordnung auf Wellenfrontqualität im Durchgang oder auf Auflagemaß hin überprüft und vermessen werden können.

Außerdem kann auf einer optischen Linsen- oder Spiegelfläche mit schwacher Krümmung ein Doppelbild aus zwei zueinander unter einem Winkel α stehende, beleuchtete Flächenabschnitte erzeugt und ausgewertet werden. Durch Änderung der Messentfernung kann der Flächenneigungswinkel in Abhängigkeit des Abstandes und damit zum Abtastdurchmesser auf der reflektierenden Fläche bestimmt werden. Nach einer anschließenden Rechenoperation kann und die Oberflächengeometrie bestimmt werden. Gleichzeitig lässt sich bei diesem Verfahren die Abweichung der beiden Blendenbilder zum festen Bezugspunkt als Zentrierfehler auswerten. Bei stärker gekrümmten optischen Flächen, vorzugsweise asphärischen Flächen, können mit Hilfe von vorgeschalteten (Fokussier-)Optiken auch diese ausgewertet werden.

Weiterhin kann das System auch eingesetzt werden, um in einem Luft- oder Wasserfahrzeug die Nivellierung bzw. Horizontierung über Wasser durchzuführen indem das Gerät senkrecht auf die Wasseroberfläche gerichtet und die Winkellage zu einem Bezugspunkt bzw. zu einer Bezugsachse bestimmt wird.

In bestimmten Fällen kann es notwendig oder günstig sein, die Messentfernung zwischen Meßvorichtung und reflektierendem Element zu bestimmen. Dazu kann über die bekannte Größe der Blende (4) und der Größe des Blendenbildes der Abbildungsmaßstab und damit bei bekannter Brennweite des optischen Systems (6) der Abstand errechnet werden.

In einer besonderen Anwendung der Anordnung als Messverfahren, wird als reflektierendes Element (5) ein einachsiger Winkelspiegel oder ein zweiachsiger Retroreflektor verwendet. Winkelspiegel bzw. Retroreflektoren (Triplespiegel bzw. Cornercube) besitzen die Eigenschaft, auftreffende Strahlenbündel eindimensional bzw. zweidimensional in diejenige Richtung zu reflektieren, aus der sie gekommen sind. Mit Hilfe eines solchen Elementes ist es also möglich, entsprechende Strahlenbündel so zu detektieren, dass nicht bzw. nicht nur die Kippung (bei eindimensionalen Winkelspiegeln), sondern eine seitliche Verschiebung des Elementes zu einem auf dem Detektor ermittelten Winkel oder einer Winkeländerung führt.

Aus diesem gemessenen Winkel kann beispielsweise bei bekannter Schnittweite **s** (gleich dem Abstand zwischen Messvorrichtung und reflektierendem Element = Messentfernung) über eine Tangensfunktion der gesuchte Wert für eine seitliche Verschiebung x bzw. delta x berechnet werden.

Mit dieser Erfindung lassen sich automatische Fluchtungsmessungen nach der Höhenmethode durchführen.

In den meisten Fällen der erfindungsgemäßen Anwendung können die Abstände hinreichend genau festgelegt oder anderweitig bestimmt werden.

Es ist aber auch möglich, die Messentfernung s zwischen Messvorrichtung und reflektierendem Element derart zu bestimmen, dass über die bekannte Größe der Blende (4) und der auf dem Detektor gemessenen Größe des Blendenbildes der Abbildungsmaßstab ermittelt wird. Über die bekannte Brennweite des optischen Systems (6) und dem Abbildungsmaßstab kann die Entfernung **s** bestimmt werden.

In einer besonderen Ausgestaltung ist die Blende (4) nicht kreisrund bzw. einflächig, sondern beispielsweise durch einen Steg in der Mitte zweigeteilt, so dass sich als Abbild auf dem Detektor nicht ein Leuchtpunkt ergibt, sondern 2 halbmondförmige Flächen. Vorteil dabei ist, dass nicht die ansteigende und abfallende Flanke den Bilddurchmesser ergeben, welcher bei kritischen Bedingungen wie zum Beispiel Sättigung des Detektors u.a. zur fehlerhaften Bestimmung des Abbildungsmaßstabes führt, sondern dieser über die Mittelpunkte bzw. Schwerpunkte der Halbmondflächen exakt bestimmbar ist. Selbstverständlich sind daneben noch andere Blendengeometrien denkbar, beispielsweise solche mit quadratischen oder rechteckigen Begrenzungen und

Stegen oder mit 2 kreisförmigen Blendenöffnungen. Die Blenden können außerdem nicht nur zweifach, sondern auch mehrfach unterteilt sein, sofern sie eine entsprechende Abbildung durch die beschriebenen Retroreflektoren zulassen.

Nachfolgend werden Ausführungsbeispiele der Erfindung anhand der beigefügten Zeichnungen näher erläutert. Es zeigt :
Fig. 1. eine schematische Ansicht eines ersten Ausführungsbeispiels der erfindungsgemäßen Messvorrichtung.
Fig. 2. ein zweites Ausführungsbeispiel
Fig.3. ein drittes Ausführungsbeispiel zum besseren Verständnis der Erfindung.
Fig. 4. den Strahlengang bei einer Abbildung der Blende unter einem Winkel a=0 zur reflektierenden Fläche.
Fig. 5. Den Strahlengang bei einer Abbildung der Blende unter einem Winkelan0 zur reflektierenden Fläche.
Fig. 6. Das Bild der Blendenlage unter einem Winkela =0 zur reflektierenden Fläche vom Detektor aus gesehen.
Fig. 7. Das Bild der Blendenlage unter einem Winkela0 zur reflektierenden Fläche vom Detektor aus gesehen.
Fig. 8. die Anordnung mit einem Retroreflektor als reflektierendes Element zur Messung von seitlichen Verschiebungen.

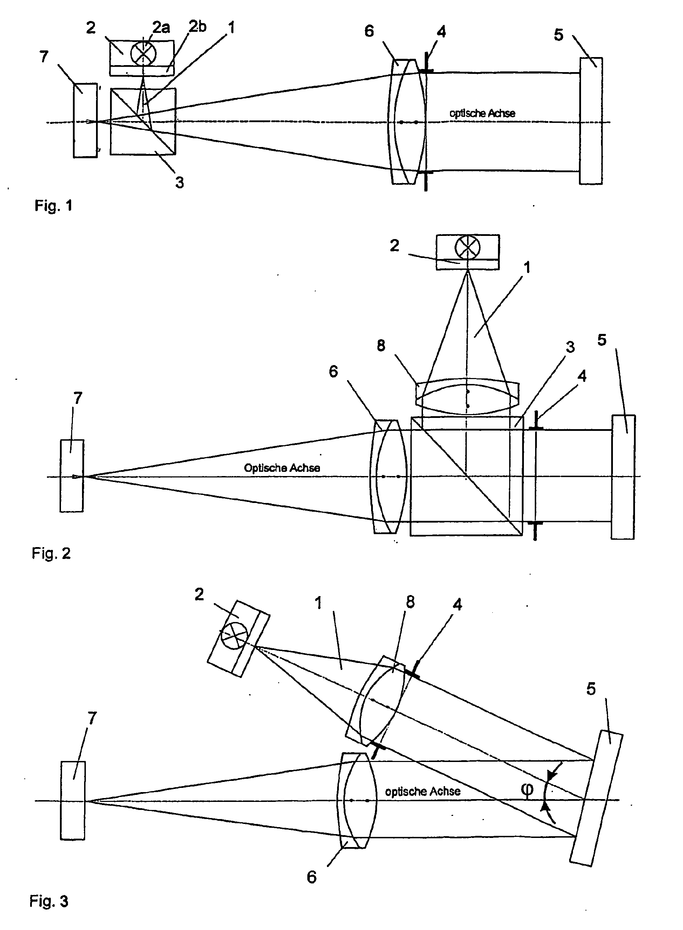

In Fig. 1 ist ein bevorzugtes Beispiel der erfindungsgemäßen Vorrichtung zu sehen, wobei das Strahlenbündel 1 von einer. Strahlungsquelle 2 ausgehend über einen Strahlenteiler 3 in das optische Gesamtsystem eingestrahlt, um90 abgelenkt wird und die Blende 4 durchleuchtet. Am reflektierenden Element 5, das den Winkeländerungen unterworfen ist und welches vorzugsweise als Planspiegel ausgeführt ist, wird das Strahlenbündel in sich reflektiert und über das optische System 6 nach erneutem Durchgang durch den Strahlteiler 3 auf den Detektor 7 abgebildet.

In Fig. 2 ist ein zweites Ausführungsbeispiel gezeigt, bei dem im wesentlichen der Strahlteiler 3 im quasi-parallelen statt im divergenten Strahlengang sitzt. Die Blende 4 ist zwischen Strahlteiler 3 und Spiegel 5 angeordnet. Die Blende ist dann Feldblende und Aperturblende zugleich.

In Fig. 3 ist ein Beispiel zum besseren Verständnis der Erfindung gezeigt, bei dem das optische System 6 und ein weiteres optisches System 8 unter einem Winkel ϕ angeordnet sind und die Blende 4 als reine Feldblende fungiert.

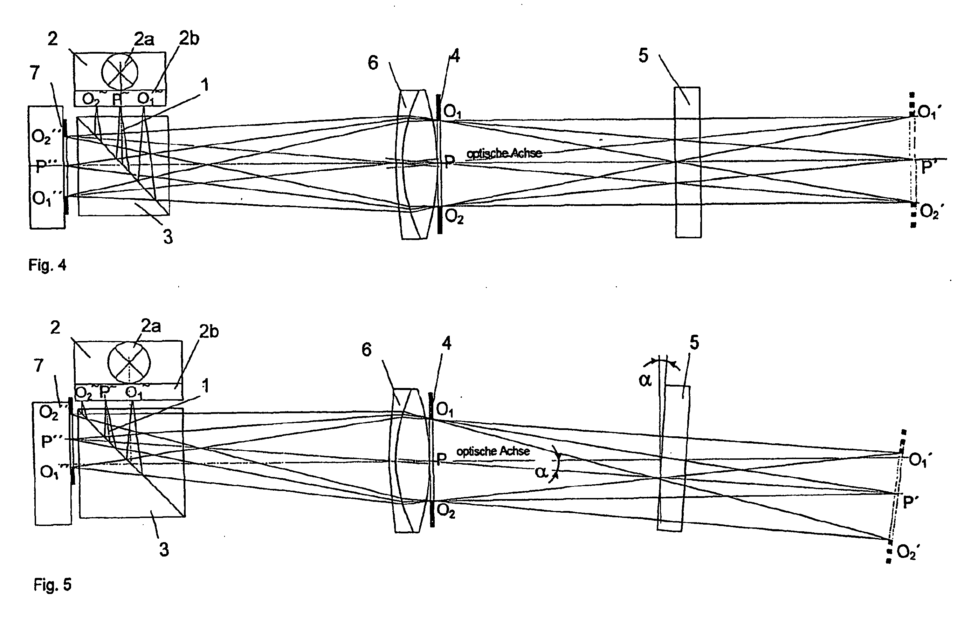

In Fig. 4 ist schematisch das Strahlenbündel 1 ausgehend von einem Punkt P^{~} auf der von einer Strahlungsquelle 2a beleuchteten Leuchtfläche 2b zu sehen, welches bei senkrecht stehender Spiegelfläche 5 zur Abbildung des Punktes P der Blende in den Bildpunkt P" beiträgt. Die benachbarten Leuchtpunkte O₁^{~} und O₂^{~} (Rand der Eintrittsluke) auf der leuchtenden Fläche 2b tragen dazu bei, dass der Blendenrand (O₁) bzw. O₁' und O₂ bzw. O₂') in die Blendenrand-Bildpunkte O₁" bzw.. O₂" (Rand der Austrittsluke) auf dem Detektor 7 abgebildet wird. Die Intensität der Helligkeitsverteilung innerhalb des Blendenbildes auf dem Detektor wird durch die Gesamtheit der benachbarten Punkte und deren Leuchtdichte auf dem Leuchtfeld bestimmt. Diese Punkte liegen rotationssymmetrisch um den Punkt P^{~} und zwar zwischen den Punkten P^{~} und Oₙ^{~} (mit 1 < n < oo) und werden in die Blendenbildebene abgebildet.

Fig. 5 zeigt schematisch den Strahlengang bei um den Winkel a geneigter Spiegelfläche 5. Der Hauptstrahl von Punkt P bzw. P' ausgehend steht senkrecht auf der Spiegelfläche 5 und schließt ebenfalls den Winkel α zur optischen Achse ein. Das Bild der Blende (Austrittsluke) ist in diesem Fall innerhalb der Bildebene bzw. Detektorebene 7 seitlich verschoben. Ebenfalls das zu dieser Abbildung beitragen den Leuchtfeld innerhalb der Leuchtfläche 2b, die sog. Eintrittsluke.

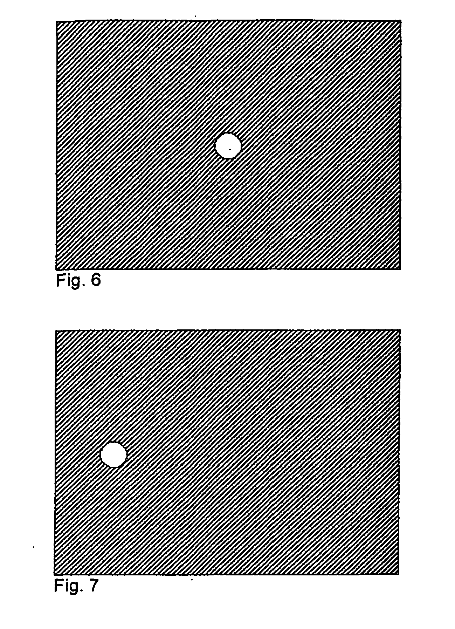

Fig. 6 zeigt schematisch das Beispiel des Blendenbildes auf dem Detektor, wenn der Spiegel senkrecht zur optischen Achse steht bzw. der Winkel α =0° beträgt, wie in Fig. 4 abgebildet.

Fig.7 zeigt schematisch das Beispiel des Blendenbildes auf dem Detektor, wenn der Spiegel um einen Winkel α ≠ 0° gegenüber der optischen Achse geneigt ist, wie in Fig. 5 gezeigt. Die Verschiebung der Blendenlage kann nun gegenüber der Ausgangslage bzw. Referenzlage aus Fig. 6 ermittelt und daraus die

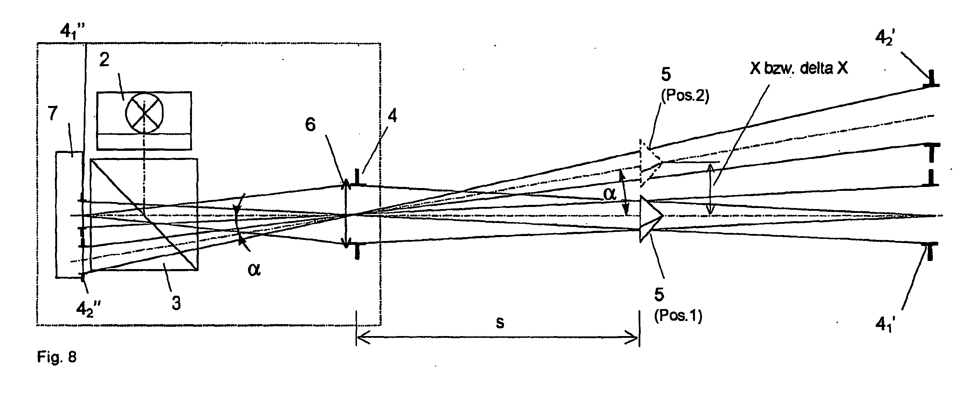

Winkeländerung, welche näherungsweise proportional ist zur Verschiebung der Blendenlage, automatisch bestimmt werden. Fig. 8 zeigt schematisch die Anordnung mit einem reflektierenden Element (5), das als einachsiger Winkelspiegel oder ein zweiachsiger Retroreflektor ausgeführt ist, mit dessen Hilfe eindimensional oder zweidimensional seitliche Verschiebungen x bzw. delta x ermittelbar sind.

## Patentansprüche

1. Verfahren zur berührungslosen Messung von Winkeln oder Winkeländerungen an Gegenständen mit folgenden Verfahrensschritten:
- Erzeugen eines Strahlenbündels (1) mit einem flächenhaften Strahler (2) oder einer Leuchte mit entsprechenden Strahldichteverteilungen oder Displaybeleuchtungen mit einstellbaren Absorptionsmustern in der Beleuchtungsebene um charakteristische Leuchtdichteverteilungen zu generieren;
- Durchleuchten einer Blende (4) mit dem Strahlenbündel (1) wobei die Blende (4) gleichzeitig als Apertur- und Feldblende wirkt und eine anpassbare oder variable Blendenöffnung aufweist, um entsprechend der vorgegebenen Messentfernung eine Anpassung der Größe des Blendenabbildes auf einem Detektor (7) zu ermöglichen;
- Abbilden der durchleuchteten Blende (4) nach Reflexion an einem entfernten reflektierenden Element (5), dass den zu messenden Winkeländerungen unterworfen ist, durch ein optisches System (6) auf der Detektorfläche (7);
- Erfassen des Bildes der Blende (4) auf der Detektorfläche (7);
- Ermitteln der Lage des Blendenbildes im Bezug auf einer Referenzlage des ursprünglichen Blendenbildes oder auf einen Referenzpunkt auf der Detektorfläche; und
- Bestimmen des Messwerts der Winkeländerung α anhand der Lageverschiebung zur Referenzlage bzw. zum Referenzpunkt.

2. Verfahren nach Anspruch 1, **dadurch gekennzeichnet, dass** beim Schritt des Durchleuchtens ein quasi-paralleles oder näherungsweise quasi-paralleles Strahlenbündel verwendet wird.

3. Verfahren nach Anspruch 1 oder 2, **dadurch gekennzeichnet, dass** das Durchleuchten der Blende (4) durch ein zusätzliches optisches System (8) erfolgt.

4. Verfahren nach einem der Ansprüche 1 bis 3, **dadurch gekennzeichnet, dass** das reflektierende Element eine geeignete Beugungsstruktur aufweist; dass die Beugungsstruktur in einer Dimension bzw. Richtung oder in zwei Richtungen beugt; dass bei einer Beugung in zwei Richtungen die Beugungsstruktur in den beiden Richtungen unterschiedliche Gitterkonstanten aufweist und damit unterschiedliche Beugungswinkel in den beiden Richtungen hervorruft.

5. Verfahren nach einem der Ansprüche 1 bis 3, **dadurch gekennzeichnet, dass** das reflektierende Element als Retroreflektor ausgeführt ist, dass der Retroreflektor ein Winkelspiegel ist, der in nur einer Ebene neigungsinvariant ist oder dass der Retroreflektor ein Tripelspiegel oder Cornercube ist, der in zwei Ebenen neigungsinvariant ist; und dass über die Winkelmessung und dem ermittelten Abstand zwischen Reflektor und Vorrichtung über die Tangensbeziehung seitliche Verschiebungen gemessen werden können.

6. Messvorrichtung zur berührungslosen Messung von Winkeln oder Winkeländerungen an Gegenständen, mit
- einem flächenhaften Strahler (2) oder einer Leuchte mit entsprechenden Strahldichteverteilungen oder Displaybeleuchtungen mit einstellbaren Absorptionsmustern in der Beleuchtungsebene um charakteristische Leuchtdichteverteilungen zu generieren und zur Erzeugung eines Strahlenbündels (1),
- einer nachgeschalteten Blende (4), die vom Strahlenbündel (1) durchleuchtet wird und gleichzeitig als Apertur- und Feldblende wirkt und eine anpassbare oder variable Blendenöffnung aufweist, um entsprechend der vorgegebenen Messentfernung eine Anpassung der Größe des Blendenabbildes auf einem Detektor (7) zu ermöglichen,
- einem in einer vorgegebenen Messentfernung nachgeschalteten reflektierenden Element (5), welches der zu messenden Winkeländerung α unterworfen wird,
- einem optischen System (6), welches das Blendenabbild aus dem zurückreflektierten Strahlenbündel erzeugt,
- einem optoelektronischen Detektor (7), auf dem das Blendenabbild projiziert wird, und
- einer nachgeschalteten elektronischen Auswerteeinheit, wobei die Auswerteeinheit zur Bestimmung des Abstands der Lage des Blendenbildes zu einer vorherigen Referenzlage bzw. zu einem Referenzpunkt eingerichtet ist, um daraus den Messwert des Winkels bzw. der Winkeländerung zu erhalten.

7. Messvorrichtung nach Anspruch 6, **dadurch gekennzeichnet, dass** die Auswerteeinheit zur Bestimmung der Lage des Blendenbildes den Mittelpunkt oder den Rand des Blendenbildes anhand dessen Helligkeitsverteilung automatisch ermittelt oder, dass die Auswerteeinheit zur Bestimmung der Lage des Blendenbildes den Mittelpunkt des Blendenbildes anhand dessen Flächenschwerpunkt automatisch ermittelt.

8. Messvorrichtung nach einem der Ansprüche 6 bis 7, **dadurch gekennzeichnet, dass** das optische System in Richtung der optischen Achse verstellbar ist, um das Blendenbild auf dem Detektor (7) zu fokussieren.

9. Messvorrichtung nach einem der Ansprüche 6 bis 8, **dadurch gekennzeichnet, dass** die Blende (4), das optische System, das reflektierende Element (5) und der Detektor (7) auf einer Achse angeordnet sind und dass ein Strahlenteiler (3) auf dieser Achse zwischen Blende (4) und Detektor angeordnet ist und die Strahlungsquelle (2) das Strahlenbündel zur Beleuchtung der Blende (4) quer zu dieser Achse in den Strahlenteiler (3) einstrahlt.

10. Messvorrichtung nach einem der Ansprüche 6 bis 9, **dadurch gekennzeichnet, dass** das reflektierende Element eine geeignete Beugungsstruktur aufweist; dass die Beugungsstruktur in einer Dimension bzw. Richtung oder in zwei Richtungen beugt; dass das reflektierende Element als Retroreflektor ausgeführt ist; dass der Retroreflektor ein Winkelspiegel ist, der in nur einer Ebene neigungsinvariant ist oder dass der Retroreflektor ein Tripelspiegel oder Cornercube ist, der in zwei Ebenen neigungsinvariant ist.

## Claims

1. A method for contactless measurement of angles or angle changes on objects, said method comprising the steps of
- generating a ray bundle (1) by means of one element from the group consisting of a surface emitter (2) or a light, said light having corresponding beam density distributions, or display illuminations, said display illuminations having adjustable absorption patterns in the illumination plane, in order to generate characteristic light density distributions;
- transilluminating a diaphragm (4) using the ray bundle (1), wherein the diaphragm acts simultaneously as an aperture diaphragm and a field diaphragm and has an adjustable or variable diaphragm opening in order to allow adaptation of the size of the diaphragm image on a detector (7) corresponding to a predefined measurement distance;
- focusing the transilluminated diaphragm (4) through an optical system (6) on the detector surface (7) after reflection on a distal reflecting element (5) which is subjected to the angle changes to be measured;
- detecting the image of the diaphragm (4) on the detector surface (7);
- ascertaining the position of the diaphragm image in relation to a reference position of the original diaphragm image or to a reference point on the detector surface; and
- determining the measured value of the angle change α on the basis of the position displacement to the reference position and to the reference point, respectively.

2. The method according to claim 1,
**characterised in that**
a quasi-parallel or approximately quasi-parallel ray bundle is used in the step of transillumination.

3. The method according to claim 1 or 2,
**characterised in that**
the transillumination of the diaphragm (4) is performed by an additional optical system (8).

4. The method according to any one of claims 1 to 3,
**characterised in that**
the reflecting element has a suitable diffraction structure, that the diffraction structure diffracts in one dimension or direction, respectively, or in two directions and that, in case of a diffraction in two directions, the diffraction structure has different grating constants in the two directions and therefore produces different angles of diffraction in the two directions.

5. The method according to any one of claims 1 to 3,
**characterised in that**
the reflecting element is implemented as a retroreflector, the retroreflector is an angle mirror which is inclination-invariant in only one plane or that the retroreflector is a triple mirror or corner cube which is inclination-invariant in two planes and that lateral displacements may be measured via the angle measurement and the distance ascertained between the reflector and a device via the tangent relationship.

6. A measuring device for contactless measurement of angles or angle changes on objects, comprising:
- a surface emitter (2) or a light having corresponding beam density distributions or display illuminations with adjustable absorption patterns in the illumination plane in order to generate characteristic light density distributions and to produce a ray bundle (1),
- a subsequentially arranged diaphragm (4), which is transilluminated by the ray bundle (1) and acts simultaneously as an aperture diaphragm and a field diaphragm and has an adjustable or variable diaphragm opening in order to allow adaptation of the size of the diaphragm image on a detector (7) in accordance with the predefined measurement distance;
- a reflecting element (5) downstream at a predefined measurement distance, which is subjected to the angle change α to be measured;
- an optical system (6), which generates the diaphragm image from the reflected ray bundle,
- an optoelectronic detector (7), on which the diaphragm image is projected and,
- a subsequentially arranged electronic evaluation unit, the evaluation unit being set up to determine the distance of the position of the diaphragm image from a prior reference position and from a reference point, respectively, in order to obtain therefrom the measured value of the angle and the angle change, respectively.

7. The measuring device according to claim 6,
**characterised in that**
to determine the position of the diaphragm image, the evaluation unit automatically ascertains the centre point or the edge of the diaphragm image on the basis of its brightness distribution or, to determine the position of the diaphragm image, the evaluation unit automatically ascertains the centre point of the diaphragm image on the basis of its centroid.

8. The measuring device according to any one of claims 6 to 7,
**characterised in that**
the optical system is adjustable in the direction of the optical axis in order to focus the diaphragm image on the detector (7).

9. The measuring device according to any one of claims 6 to 8,
**characterised in that**
the diaphragm (4), the optical system, the reflecting element (5), and the detector (7) are positioned on one axis and a beam splitter (3) is positioned on this axis between the diaphragm (4) and the detector and the radiation source (2) emits the ray bundle for illuminating the diaphragm (4) into the beam splitter (3) transversely to this axis.

10. The measuring device according to any one of claims 6 to 9,
**characterised in that**
the reflecting element has a suitable diffraction structure; the diffraction structure dif fracts in one dimension or direction, respectively, or in two directions; the reflecting element is implemented as a retroreflector; the retroreflector is an angle mirror which is inclination-invariant in only one plane or that the retroreflector is a triple mirror or corner cube, which is inclination-invariant in two planes.

## Revendications

1. Procédé pour mesurer sans contact des angles ou des variations d'angles sur des objets, comprenant les étapes qui consistent à :
- produire un faisceau de rayons (1) avec un émetteur surfacique (2) ou une lampe à répartitions spectrales correspondantes ou des éclairages d'écrans à modèles d'absorption dans le plan de l'éclairage pour générer des répartitions spectrales caractéristiques ;
- faire traverser un diaphragme (4) par le faisceau de rayons (1), le diaphragme (4) agissant simultanément comme diaphragme d'ouverture et diaphragme de champ et comportant une ouverture de diaphragme adaptable ou variable, pour permettre une adaptation de la taille de l'image du diaphragme sur un détecteur (7) en fonction de l'éloignement de mesure donné ;
- reproduire le diaphragme (4) traversé par la lumière, après réflexion sur un élément réfléchissant (5) éloigné qui est soumis aux variations angulaires, par l'intermédiaire d'un système optique (6) sur la surface de détecteur (7) ;
- capter l'image du diaphragme (4) sur la surface de détecteur (7) ;
- déterminer la position de l'image de diaphragme par rapport à une position de référence de l'image de diaphragme initiale ou à un point de référence sur la surface de détecteur ; et
- déterminer la valeur de mesure de la variation angulaire α à l'aide de la variation de position par rapport à la position de référence ou respectivement au point de référence.

2. Procédé selon la revendication 1, **caractérisé en ce qu'**un faisceau de rayons quasi-parallèles ou approximativement quasi-parallèles est utilisé lors de l'étape de l'éclairage traversant.

3. Procédé selon la revendication 1 ou 2, **caractérisé en ce que** l'éclairage traversant le diaphragme (4) s'effectue par l'intermédiaire d'un système optique supplémentaire (8).

4. Procédé selon l'une des revendications 1 à 3, **caractérisé en ce que** l'élément réfléchissant comporte une structure de diffraction adaptée ; que la structure de diffraction diffracte dans une dimension ou respectivement une direction, ou dans deux directions ; que dans le cas d'une diffraction dans deux directions, la structure de diffraction comporte des constantes de réseau différentes dans les deux directions et entraîne ainsi des angles de diffraction différents dans les deux directions.

5. Procédé selon l'une des revendications 1 à 3, **caractérisé en ce que** l'élément réfléchissant est réalisé sous forme de rétroréflecteur, que le rétroréflecteur est un goniomètre à miroir qui n'est invariant en inclinaison que dans un plan, ou que le rétroréflecteur est un miroir triple ou un coin de cube qui est invariant en inclinaison dans deux plans, et que des décalages latéraux peuvent être mesurés par rapport au rapport tangentiel par l'intermédiaire de la mesure d'angle et de l'écartement déterminé entre le réflecteur et le dispositif.

6. Dispositif de mesure pour mesurer sans contact des angles ou des variations d'angles sur des objets, comportant
- un émetteur surfacique (2) ou une lampe à répartitions spectrales correspondantes ou des éclairages d'écrans à modèles d'absorption dans le plan de l'éclairage pour générer des répartitions spectrales caractéristiques et pour produire un faisceau de rayons (1),
- un diaphragme monté en aval (4) qui est traversé par le faisceau de rayons (1) et qui sert simultanément de diaphragme d'ouverture et de diaphragme de champ et comportant une ouverture de diaphragme adaptable ou variable, pour permettre une adaptation de la taille de l'image du diaphragme sur un détecteur (7) en fonction de l'éloignement de mesure donné,
- un élément réfléchissant (5) monté en aval à une distance de mesure donnée, qui est soumis à la variation d'angle α à mesurer,
- un élément optique (6) qui produit l'image de diaphragme à partir du faisceau de rayons réfléchi,
- un détecteur optoélectronique (7) sur lequel l'image de diaphragme est projetée, et
- une unité d'analyse électronique montée en aval, l'unité d'analyse étant installée pour déterminer l'écartement de la position de l'image de diaphragme par rapport à une position de référence ou à un point de référence, pour obtenir à partir de là la valeur de mesure de l'angle ou de la variation d'angle.

7. Dispositif de mesure selon la revendication 6, **caractérisé en ce que** l'unité d'analyse destinée à déterminer la position de l'image de diaphragme, détermine automatiquement le centre ou le bord de l'image de diaphragme à l'aide de son réglage de luminosité ou que l'analyse destinée à déterminer la position de l'image de diaphragme détermine automatiquement le centre de l'image de diaphragme à l'aide de son centre surfacique.

8. Dispositif de mesure selon l'une des revendications 6 à 7, **caractérisé en ce que** le système optique est réglable dans la direction de l'axe optique, pour focaliser l'image de diaphragme sur le détecteur (7).

9. Dispositif de mesure selon l'une des revendications 6 à 8, **caractérisé en ce que** le diaphragme (4), le système optique, l'élément réfléchissant (5) et le détecteur (7) sont disposés sur un axe et qu'un séparateur de faisceau (3) est disposé sur cet axe entre le diaphragme (4) et le détecteur, et la source de rayonnement (2) envoie le faisceau de rayons pour éclairer le diaphragme (4) perpendiculairement à cet axe dans le séparateur de faisceau (3).

10. Dispositif de mesure selon l'une des revendications 6 à 9, **caractérisé en ce que** l'élément réfléchissant comporte une structure de diffraction adaptée ; que la structure de diffraction diffracte dans une dimension ou respectivement une direction, ou dans deux directions ; que l'élément réfléchissant est réalisé en rétroréflecteur ; que le rétroréflecteur est un goniomètre à miroir qui n'est invariant en inclinaison que dans un plan, ou que le rétroréflecteur est un miroir triple ou un coin de cube qui est invariant en inclinaison dans deux plans.
